**Europäisches Patentamt**

**European Patent Office**

**Office européen des brevets**

(11) Publication number: **0 148 181**
**B1**

## (12) EUROPEAN PATENT SPECIFICATION

(45) Date of publication of patent specification: **19.08.87**

(21) Application number: **83903831.2**

(22) Date of filing: **15.11.83**

(86) International application number:
**PCT/SE83/00401**

(87) International publication number:
**WO 84/01924 24.05.84 Gazette 84/13**

(51) Int. Cl.⁴: **B 62 L 1/10, B 62 L 5/00,
F 16 D 41/00, F 16 D 41/24**

(54) **BRAKE DEVICE FOR A CYCLE.**

(30) Priority: **15.11.82 SE 8206473**

(43) Date of publication of application:
**17.07.85 Bulletin 85/29**

(45) Publication of the grant of the patent:
**19.08.87 Bulletin 87/34**

(84) Designated Contracting States:
**AT BE CH DE FR GB LI LU NL SE**

(56) References cited:
**DE-A-1 605 786
DE-A-2 915 181
DE-B-1 116 558
DE-C- 139 815
US-A-4 051 924
US-A-4 261 449**

(73) Proprietor: **AB TRAMA
Smedjevägen 16
S-131 33 Nacka (SE)**

(73) Proprietor: **LOHMAN, Oskar Rune
Smedjevägen 16
S-131 33 Nacka (SE)**

(72) Inventor: **LOHMAN, Oskar Rune
Smedjevägen 16
S-131 33 Nacka (SE)**

(74) Representative: **Modin, Jan et al
c/o Axel Ehrners Patentbyra AB Box 5342
S-102 46 Stockholm (SE)**

Courier Press, Leamington Spa, England.

## Description

This invention relates to a brake device for a cycle as specified in the preamble of claim 1, for example as disclosed in DE—C—139 815 bicycles provided with gear transmissions typically have the drawback that they lack pedal operated brakes. This is disadvantageous from point of traffic security firstly because it is not possible to produce the same braking force as in brakes operated by the feet and secondly because persons familiar with the single gear type of bicycles often face big difficulties when they have to use the hand brakes instead of the foot brakes. Especially in panic situations such persons often act in reflex and the result is frequently that no braking at all takes place. A further disadvantage is that only one hand is available for the braking operation when the bicycle driver is using one hand to indicate a change of direction.

These and other reasons have resulted in many attempts to provide a brake which permits pedal operated braking also in connection with multi-geared bicycles.

The suggested solutions however have been too complicated respectively necessitated such changes in the construction of the bicycle that they have not reached a more extensive use.

To this end, a brake device in accordance with the present invention is characterised by the features specified in the characterising portion of claim 1.

The accompanying drawing illustrates some exemplary embodiments of the invention, wherein

Fig. 1 is a partial section through a free wheel and a friction coupling, connected to the crank portion of a bicycle according to a first embodiment of the invention.

Fig. 2 is a transverse section through the device shown in fig. 1.

Fig. 3 is a section through a second embodiment of a free wheel and friction coupling device connected to the crank portion of a bicycle.

Fig. 4 is a longitudinal section through a first embodiment of a releasable free wheel device connected to the rear hub of a bicycle.

Fig. 5 is a section through a second embodiment of a releasable free wheel device incorporated in the rear hub of a bicycle.

Fig. 6 schematically shows a rim brake while

Fig. 7 in perspective shows a brake element of the rim brake of fig. 6 and

Fig. 8 finally is a modification of the element of fig. 7.

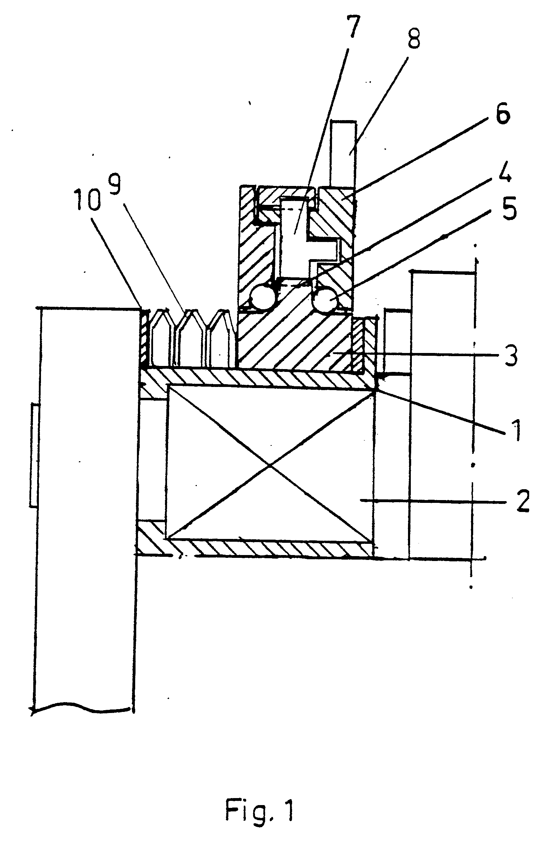

The device shown in fig. 1—3 has as a main object to constitute a free wheel construction as well as a friction coupling.

According to the embodiment of fig. 1 a sleeve 1 is non-rotatably connected to the crank shaft 2 of a bicycle. Rotatably mounted over the sleeve 1 is a rotational member 3, preferably designed as a part of a ball bearing ring, said member 3 being formed as or connected to a sprocket wheel 4.

Rotatably mounted over the rotational member 3 via balls 5 is a ring 6 provided with one or several catches 7, intended to cooperate with the sprocket wheel 4. This latter has the teeth thereof so directed that the catch or the catches will slide over the teeth when the pedals are actuated for moving the bicycle in a forward direction. When however the pedals are actuated in the opposite direction the catch or the catches engage the teeth of the sprocket wheel and the sprocket wheel carries with it the ring 6 in said anticlockwise direction. An arm or a disc 8 is securely fixed to the ring 6 and the former thus will be moved as described. It has been presumed that the rotational member 3 and consequently also the sprocket wheel 4 is rotatable with the crank shaft and this is usually also the case by the action of a compression spring 9 having one end thereof resting against an annular washer 10 supported by for instance one of the crank arms and the opposite end thereof resting against one end surface of the rotational member 3. The arm or disc 8 operates as will be explained more in detail later on one or several brakes as well as a device to render the free wheel of the bicycle in-active.

The brake force which can be exerted by means of the foot is considerably greater than the force that can be obtained from a hand operated brake. This means that a heavy braking action will impose a considerable tension upon the transmission means such as cables, which are intended to transmit the power from the pedals to the brakes and to the dis-connecting device and there is thus a pronounced risk that such a sudden force can cause a rupture of the cable. When such a heavy braking takes place in the illustrated embodiment the rotational member 3 slips in relation to the sleeve 1 and the transmitted power is thus reduced to a value which the transmission can withstand.

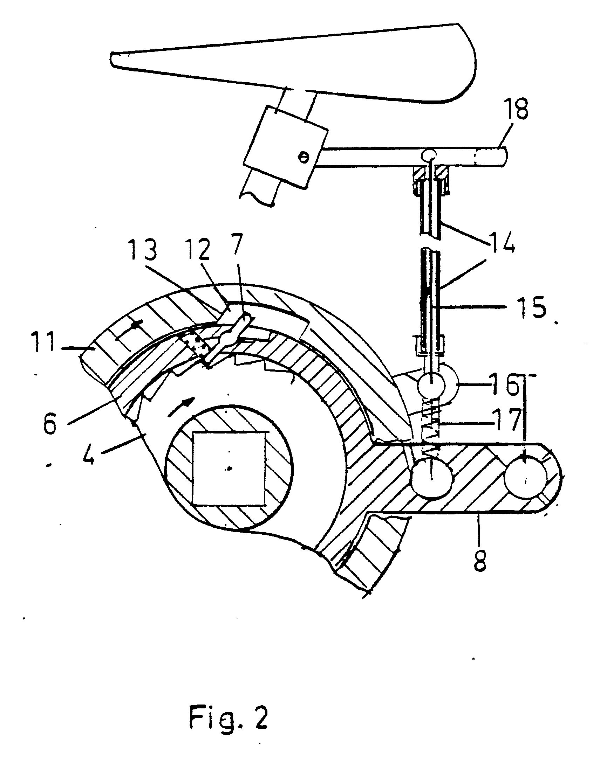

A certain advantage when parking a bicycle provided with the device now described is that the rear wheel will lock itself when attempts are made to move a parked bicycle backwards which renders very rapid stealings impossible. In order to enable the owner of the bicycle to handle his bicycle also after parking it is possible to arrange according to fig. 2 a preferably lockable release device in connection with the saddle.

For this purpose an outer ring 11 is turnably mounted over the ring 6 and said outer ring is provided with one or several recesses 12 the surrounding walls of which cause the catch or the catches 7 to disengage the teeth of the sprocket wheel when the outer ring is turned in relation to the ring 6 in the direction of the arrow. It is understood that the free wheel 4, 7 thereby has been in-active which in turn makes the pedals free to move in both directions. The relative movement between the outer ring 11 and the ring 6 is in the illustrated embodiment accomplished thereby that the wire 15 of a cable 14 acts upon the arm 8, which latter is normally held at a distance from an arm 16, securely connected to the outer ring 11 by means of an interimposed compression spring 17. The cable housing 14 is connected to the arm 16 and in the opposite end thereof the cable is connected to a lever 18, which is pivotally mounted to the attachment for the saddle. The release of the free wheel is accomplished by moving the lever upwards and it is of course possible to make this lever lockable when it is desired to prevent unauthorized people to move the bicycle backwards.

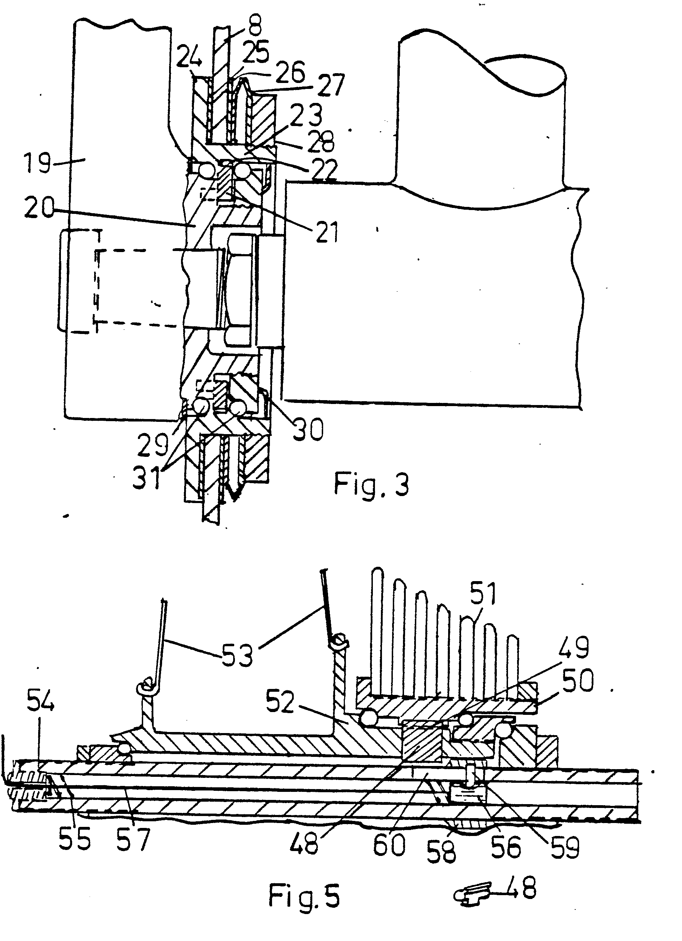

Fig. 3 shows, partly in section, a more compact design of a device having the same function as the device shown in fig. 1, with the exception of the manual disengaging device, which is mainly shown in fig. 2.

According to this embodiment one pedal arm 19 of the bicycle is provided with a center part 20, to which a number of catches 21 are pivotally connected. These catches cooperate in a manner just described with a sprocket 22 of a runner 23, which is rotatably mounted about the center part 20 and which has a flange 24 towards which acts a friction lining 25, acting against one side of the arm or disc 8. A second friction lining 26 rests against the opposite side of the arm or disc and a compression spring 27 having one end thereof resting against the friction lining and the opposite end thereof resting against a ring 28 secured to the runner 23 keeps the parts 24, 25, 8 and 26 pressed against each other. The device shown in fig. 3 has as mentioned the same function as the device described in fig. 1, i.e. it leaves the arms or disc 8 uninfluenced when pedalling occurs forwards but carries the arm or disc when pedalling occurs backwards and additionally the arm or disc 8 slips in case the transmitted power exceeds a predetermined value. It is of course possible also by this embodiment to add the manual release of the free wheel 21, 22 which in principle is illustrated in fig. 2. In fig. 3 29 and 30 denote packings and 31 denote balls for the mounting of the runner 23.

The devices connected to the pedal portion of the bicycle now described give as a result that the arm or disc 8 is made active when braking with the foot takes place and thereby via transmission means such as cables brings forth a braking as well as a release of the free wheel provided in the rear hub of the bicycle.

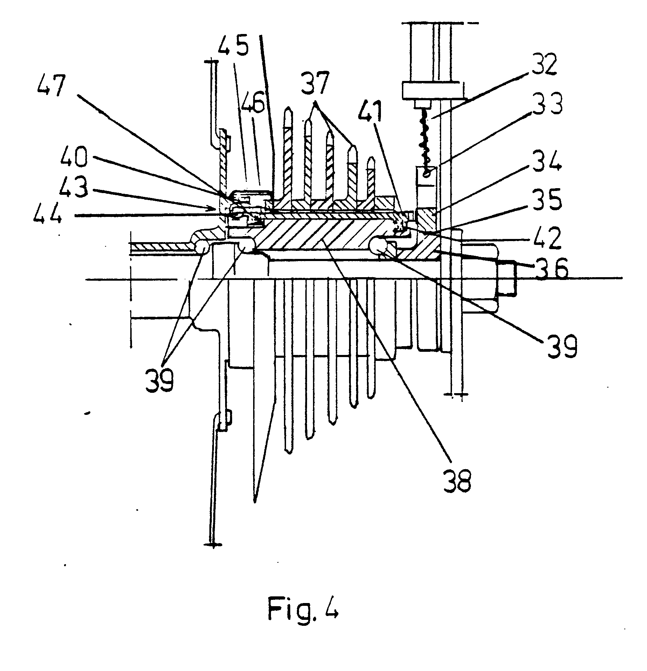

In fig. 4—5 is shown how the catch action of the free wheel provided in the rear wheel of the bicycle can be released. In the embodiment shown in fig. 4 the arm 8 is connected via a wire or the like 32 to the rear wheel of the bicycle in a manner to be described more in detail. The wire 32 is in this case connected to a projection 33 of a disc 34 which by means of a screw threading 35 is connected to the stationary shaft 36 of the rear hub. It is evident that actuation of the wire 32 will impart to the disc 34 a turning movement which in turn causes an axial displacement of the disc owing to the screw thread engagement.

A number of chain wheels 37 of various diameters are in a manner known per se threaded upon a runner 38, which in a manner known per se by means of balls or the like 39 with minor friction is rotatably mounted over the shaft 36. Through a number of longitudinal grooves 40 in the runner are inserted a number of actuating means 41 abutting with one end thereof a side surface of the disc 34 and having in the opposite end thereof obliquely cut surfaces for a purpose to be described. A spring means 42 tends to move the actuating means into contact with the disc. The free wheel of the rear wheel hub, which in the drawing has been given the general designation 43, consists in a manner known per se by balls 44, which however according to the invention can be brought out of respectively in catching position by means of a disc 46 provided with axially projecting fingers 45 said disc having a number of openings 47 which are elongated in peripheral direction and which are penetrated by the actuating means, which have their corresponding ends obliquely cut to give to the disc a limited turning movement when the actuating means 41 are axially displaced. During this turning movement the fingers 45 of the disc bring the balls out of their active catching positions, which renders the catch in-active.

When the wire 32 is actuated the actuating means will as mentioned be displaced in the length direction thereof and owing to this displacement the catches 44 are brought out of catching position, which releases the free wheel.

It is also possible to let the actuating means 41 act directly upon the balls 44.

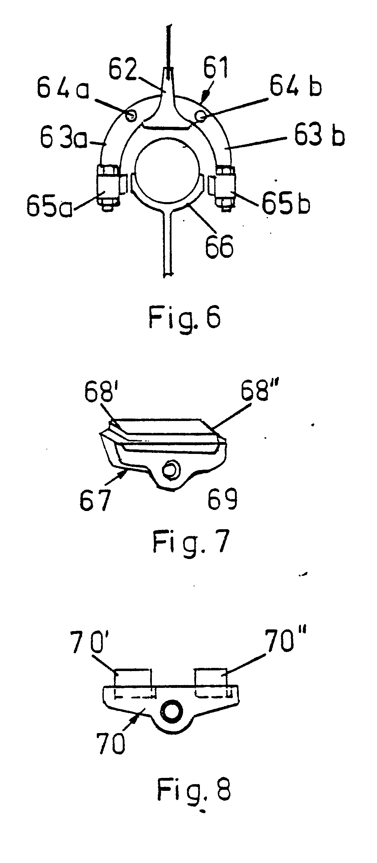

According to the embodiment shown in fig. 5 the catching elements consist of pawls 48, which are pivotally mounted and intended to cooperate with a toothing 49 of a first sleeve 50 to which chain wheels 51 of various diameters are secured. The pawls are pivoted to a second sleeve 52, which supports the spokes 53 of the wheel and which is rotatably mounted about a hollow shaft 54, which constitutes the stationary shaft of the rear hub. In said hollow tube a plunger 56 is displaceably mounted and movable against the action of a spring 55, said plunger being displaced by means of a wire 57. A sleeve 58 having the end thereof which is to the left in the drawing bevelled is displaceably mounted relative to the hollow shaft 54 and said sleeve is by means of a pin or the like 59, which protrudes through a slot 60 provided in the hollow shaft, in carrying connection with the plunger 56. A pull in the wire brings forth a displacement of the plunger 56 and thereby also of the sleeve 58. During this displacement the respectively pawls 48 are swung away so that they leave the engagement with the sprocket wheel and in this manner the one way blocking between the first and the second sleeves 50 respectively 52 ceases.

The device now described works in the following manner:

During forward pedalling the arm 8 stands still and is in an in-operative position. When however the pedals for braking purposes are moved backwards the arm will follow this movement which causes the brakes of the bicycle to be activated and also causes the blocking action of the free wheel of the rear hub to cease.

If the free wheel of the rear jub had not been influenced the free wheel should have locked the pedals during a heavy braking which had made it impossible to continue pedalling until said locking action in one way or another had been suppressed.

In fig. 6 is illustrated the construction of a rim brake, generally designated as 61. An actuating means 62 simultaneously actuates two braking elements 63a, 63b pivoted to shafts 64a and 64b and provided to act with brake blocks 65a, 65b against two opposite sides of a rim 66. According to the invention each brake block 67 (see fig. 7) is rockably provided about a center 69. By this arrangement the blocks will first act with a first surface 68' and thereupon with a second surface 68". Owing to the fact that the blocks are not rigidly mounted (they can also be arranged in cradles) an improved contact with the rim and consequently also an improved braking effect is achieved. As appears from fig. 8 the brake blocks 70 can have their active parts 70' and 70" in the form of spaced apart portions.

## Claims

1. A bicycle, in which an actuating means (8) via a free-wheel (4, 7, 21, 22) acting in a direction opposite to the free-wheel (43, 48, 49) provided in the driven wheel of the bicycle is connected to the crank portion of the bicycle, which actuating means during pedalling in driving direction is inactive but during pedalling in braking direction (opposite to the driving direction) effects a movement while actuating brake means (6), characterised in that the free-wheel (4, 7, 21, 22) connected to the crank portion of the bicycle is connected to the actuating means (8) together with a slip coupling (1, 3, 9, 10) serving to reduce the force transmitted from the crank portion to the brake means during heavy braking.

2. A bicycle according to claim 1, in which a sleeve (1) is non-rotatably connected to the crank shaft (2) of the bicycle and about said sleeve is rotatably mounted a sprocket (3, 4) with which cooperates a number of pawls (7) mounted on a ring (6) which is non-rotatably connected to the actuating means (8) and rotatably mounted relative to the sleeve (1), characterized in that a compression spring (9), acting against one end of the sleeve, tends to press the sleeve against a friction surface.

3. A bicycle according to claim 2, characterized in that an outer ring (11) is mounted over the ring (6) having the pawls (7), said outer ring having a number of internal recesses (12), that the pawls (7) have portions which are received in said recesses (12) in the outer ring (11) such that the pawls during a relative turning movement between the ring (6) and the outer ring (11) can be brught out of engagement with the teeth of the sprocket (3, 4) and that a manual actuating means (18) is provided to accomplish said relative movement.

4. A bicycle according to claim 1, in which one pedal (19) of the bicycle has a centre portion (20) having a number of blocking means (21) provided to cooperate for bringing forth a blocking action in one rotation direction with corresponding blocking means (22) of a sleeve (23) rotatably mounted over said centre portion, characterized in that said sleeve (23) has a flange (24) against which the actuating means (8) preferably via friction linings (25, 26) is kept pressed by means of a spring (27).

5. A bicycle according to anyone of claims 1—4, characterized in that the actuating means (8) via transmission means such as cable (32) actuates, during pedalling in braking direction, means (41, 58) for disconnecting the free-wheel (43, 48, 49), provided in the driven wheel of the bicycle, in its direction of engagement.

6. A bicycle according to claim 5, characterized in that the disconnecting means (41, 58) render the free-wheel (43, 48, 49) inactive by moving the catch means (48, 44) thereof out of blocking position in connection with the braking operation.

7. A bicycle according to claim 5, in which the rear hub of the bicycle in a manner known per se comprises a non-rotatable shaft (36) about which is rotatably mounted a runner (38) to which a number of chain wheels (37) are secured and the hub of the wheel is rotatably mounted in relation to said runner with the intermediary of a free-wheel mechanism (43), characterized in that openings (40) extend axially through the runner while serving as guides for fingers (41) which are provided to be displaced during the operation of the actuating means (8) and by said displacement render said free-wheel mechanism (43) inactive.

8. A bicycle according to claim 5, in which the rear hub of the bicycle has a fixed, follow shaft (54) about which is rotatably mounted a runner (52) constituting the moving part of the hub and having a number of pawls (48) which are intended to cooperate for a blocking action in one of the rotation directions with a toothing (49) of a runner (50) rotatably mounted in relation to the shaft (54) and having one or several chain wheels (51), that in the hollow shaft (54) is displacably mounted a plunger (56) which via a pin (59) which protrudes through a slot (60) in the shaft (54) is connected to a sleeve (58) displaceably mounted along the shaft (54), characterized in that said sleeve is provided to bring the pawls (48) out of engagement with the toothing (49) when displaced in one direction and that the actuating means (8) via transmission means (32) bring forth the displacement of the plunger.

9. A bicycle according to claim 6, characterized in that the cable (32) which actuates the free-wheel (43) is connected to a projection (33) of a disc (34) which by means of a threading (35) is connected to the stationary shaft (36) of the rear hub such that the disc when a turning movement is imparted to it also will fulfil a displacement movement, that about the shaft (36) is rotatably mounted a runner (38) provided with a number of longitudinal grooves (40) extending in parallel with the center axis of the runner, that in said grooves are displaceably arranged a number of actuating means (41) which each in one end thereof rests against a side surface of the disc (34), that a spring means (42) is provided, which tends to bring said actuating means into contact with the disc, that the free-wheel (43) of the hub of the rear wheel has blocking means like balls (44) which can be brought respectively out and into blocking position by means of a disc (46) having axially projecting fingers (45) and also having a number of openings (47) which are elongated (arcuate) in peripheral direction, said openings being penetrated by the actuating means which have their corresponding ends obliquely cut in order to give the latter disc a limited turning movement during the axial displacement of the actuating means (41) to bring the pawls out of their blocking positions with the aid of said fingers (45) of the disc (46).

**Patentansprüche**

1. Fahrrad, bei dem eine Betätigungsvorrichtung (8) über einen Freilauf (4, 7, 21, 22), der entgegengesetzt zu dem Freilauf (43, 48, 49) des angetriebenen Rades des Fahrrads wirkt, mit dem Kurbelbereich des Fahrrads verbunden ist, wobei die Betätigungsvorrichtung während des Pedaltretens in Fahrtrichtung inaktiv ist und während des Pedaltretens in Bremsrichtung (entgegengesetzt zur Fahrtrichtung) eine Bewegung während der Betätigung einer Bremsvorrichtung (6) bewirkt, dadurch gekennzeichnet, daß der mit dem Kurbelbereich des Fahrrads verbundene Freilauf (4, 7, 21, 22) mit der Betätigungsvorrichtung (8) zusammen mit einer Schleifkupplung (1, 3, 9, 10) verbunden ist, die zur Verringerung der während eines heftigen Bremsens von dem Kurbelbereich an die Bremsvorrichtung übertragenen Kraft vorgesehen ist.

2. Fahrrad nach Anspruch 1, wobei mit der Kurbelwelle (2) des Fahrrads eine Hülse (1) unverdrehbar verbunden und auf der Hülse ein Kettenrad (3, 4) drehbar montiert ist, mit dem mehrere Klinken (7) zusammenwirken, die auf einem Ring (6) montiert sind, der mit der Betätigungsvorrichtung (8) unverdrehbar verbunden und zu der Hülse (1) relativ drehbar angeordnet ist, dadurch gekennzeichnet, daß eine gegen das eine Ende der Hülse (1) wirkende Druckfeder (9) vorgesehen ist, wleche die Hülse gegen eine Reibfläche andrückt.

3. Fahrrad nach Anspruch 2, dadurch gekennzeichnet, daß auf dem die Klinken (7) aufweisenden Ring (6) ein Außenring (11) montiert ist, der mehrere Aussparungen (12) aufweist, in welchen Abschnitte der Klinken (7) derart aufgenommen sind, daß die Klinken während einer relativen Drehbewegung zwischen dem Ring (6) und dem Außenring (11) außer Eingriff mit den Zähnen des Kettenrades (3, 4) gebracht werden können, und daß eine manuelle Betätigungsvorrichtung (18) vorgesehen ist, mit der die relative Bewegung bewirkt wird.

4. Fahrrad nach Anspruch 1, wobei ein Pedal (19) des Fahrrads einen zentralen Bereich (20) aufweist, der mit mehreren Blockiermitteln (21) versehen ist, die für ein Blockieren in einer Drehrichtung mit korrespondierenden Blockiermitteln (22) einer Hülse (23) zusammenwirken, die auf dem zentralen Bereich (20) drehbar montiert ist, dadurch gekennzeichnet, daß die Hülse (23) einen Flansch (24) aufweist, gegen welchen die Betätigungsvorrichtung (8) mittels einer Feder (27) vorzugsweise über Reibungsverkleidungen (25, 26) angedrückt wird.

5. Fahrrad nach einem der Ansprüche 1 bis 4, dadurch gekennzeichnet, daß die Betätigungsvorrichtung (8) unter Vermittlung von Übertragungsmitteln, wie Kabeln (32), während des Pedaltretens in Bremsrichtung eine Vorrichtung (41, 58) betätigt, welche den Freilauf (43, 48, 49) des angetriebenen Rades in seiner Eingriffsrichtung freigibt.

6. Fahrrad nach Anspruch 5, dadurch gekennzeichnet, daß die Freigabevorrichtung (41, 58) den Freilauf (43, 48, 49) während des Bremsens durch ein Bewegen von dessen Sperrvorrichtung (48, 44) aus der Blockierposition heraus inaktiv macht.

7. Fahrrad nach Anspruch 5, wobei die hintere Radnabe des Fahrrads in an sich bekannter Weise eine undrehbare Welle (36) umfaßt, auf welcher ein Läufer (38) drehbar montiert ist, an welchem mehrere Kettenräder (37) befestigt sind, und wobei die Radnabe unter Vermittlung eines Freilaufmechanismus (43) in bezug auf den Läufer drehbar montiert ist, dadurch gekennzeichnet, daß Öffnungen (40) axial durch den Läufer verlaufen und als Führunfen für Finger (41), dienen, die während der Bedienung der Betätigungsvorrichtung (8) verstellt werden und durch diese Verstellung den Freilaufmechanismus (43) inaktiv machen.

8. Fahrrad nach Anspruch 5, wobei die hintere Radnabe des Fahrrads eine feststehende Hohlwelle (54) aufweist, auf welcher ein Läufer (52) drehbar montiert ist, der den beweglichen Teil der Nabe bildet und mehrere Klinken (48) aufweist, die für eine Blockierwirkung in einer der Drehrichtungen mit einer Verzahnung (49) eines Läufers (50) zusammenwirken, der in bezug auf die Welle (54) drehbar montiert ist und eines oder mehrere Kettenräder (51) aufweist, und wobei in der Hohlwelle (54) ein Plunger (56) verschieblich montiert ist, der über einen Stift (59), welcher durch einen Schlitz (60) in der Welle (54) vorsteht, mit einer Hülse (58) verbunden ist, die längs der Welle (54) verschieblich montiert ist, dadurch gekennzeichnet, daß die Hülse vorgesehen ist, um bei einer Verschiebung in einer Richtung die Klinken (48) außer Eingriff mit der Verzahnung (49) zu bringen, und daß die Betätigungsvorrichtung (8) für eine Verschiebung des Plungers unter Vermittlung einer Übertragungsvorrichtung (32) vorgesehen ist.

9. Fahrrad nach Anspruch 6, dadurch gekennzeichnet, daß das den Freilauf (43) betätigende Kabel (32) mit einem Vorsprung (33) einer Scheibe (34) verbunden ist, die mittels einer Verschraubung (35) mit der stationären Welle (36) der hinteren Radnabe derart verbunden ist, daß die Scheibe bei einer auferlegten Drehbewegung auch eine Verschiebebewegung ausführt, daß auf der Welle (36) ein Läufer (38) drehbar montiert ist, der mit mehreren Längsnuten (40) versehen ist, die sich parallel zur Mittelachse des Läufers erstrecken, daß in den Nuten mehrere Betätigungsvorrichtung (41) verschieblich angeordnet sind, die jeweils an einem Ende derselben gegen eine Seitenfläche der Scheibe (34) anliegen, daß ein Federmittel (42) vorgesehen ist, welches die Betätigungsvorrichtung in eine Berührung mit der Scheibe zu bringen versucht, daß der Freilauf (43) der Nabe des hinteren Rades eine Blockiervorrichtung, wie Kugeln (44), aufweist, die aus einer Blockierposition heraus und in dieselbe hinein mittels einer Scheibe (46) gebracht werden kann, welche axial vorstehende Finger (45) aufweist und mit mehreren Öffnungen (47) versehen ist, die in Umfangsrichtung (gekrümmt) verlaufen, und daß diese Öffnungen von den Betätigungsvorrichtungen durchsetzt sind, deren korrespondierende Enden schief zugeschnitten sind, um für die letztere Scheibe eine begrenzte Drehbewegung während der axialen Verschiebung der Betätigungsvorrichtungen (41) zu erteilen, damit die Klinken mit einer Unterstützung durch die Finger (45) der Scheibe (46) aus ihren Blockierpositionen herausgebracht werden.

**Revendications**

1. Bicyclette, dans laquelle un moyen de manoeuvre (8) agissant via une roue libre (4, 7, 21, 22) en sens opposé à la roue libre (43, 48, 49) prévue dans la roue menée de la bicyclette est relié à la partie manivelle de la bicyclette, lequel moyen de manoeuvre est inactif pendant pédalage dans le sens moteur mais décrit un mouvement pendant pédalage dans le sens de freinage (opposé au sens moteur) en actionnant le moyen de freinage (6), caractérisée en ce que la roue libre (4, 7, 21, 22) reliée à la partie manivelle de la bicyclette est reliée au moyen de manoeuvre (8) conjointement avec un accouplement à glissement (1, 3, 9, 10) servant à réduire la force transmise de la partie manivelle au moyen de freinage pendant un fort freinage.

2. Bicyclette selon la revendication 1, dans laquelle un manchon (1) est relié sans liberté de rotation à l'arbrevilebrequin (2) de la bicyclette et sur ledit manchon tourillonne un pignon Galle (3, 4) avec lequel coopèrent un certain nombre de cliquets (7) montés sur une couronne (6) reliée sans liberté de rotation au moyen de manoeuvre (8) et tourillonnant par rapport au manchon (1), caractérisée en ce qu'un ressort de compression (9), agissant contre une extrémité du manchon, tend à presser le manchon contre une surface frottante.

3. Bicyclette selon la revendication 2, caractérisée en ce qu'une couronne extérieure (11) est montée sur la couronne (6) comportant les cliquets (7), ladite couronne extérieure présentant un certain nombre d'évidements intérieurs (12), que les cliquets (7) présentent des parties qui pénètrent dans lesdits évidements (12) de la couronne extérieure (11) de sorte que les cliquets peuvent pendant un mouvement angulaire relatif entre la couronne (6) et la couronne extérieure (11) cesser d'engrener avec les dents du pignon Galle (3, 4) et qu'un moyen de manoeuvre manuel (18) est prévu pour assurer ledit mouvement relatif.

4. Bicyclette selon la revendication 1, dans laquelle une pédale (19) de la bicyclette présente une partie centrale (20) comportant un certain nombre de moyens de blocage (21) prévus pour coopérer afin d'établir un effet de blocage dans un sens de rotation avec des moyens de blocage correspondants (22) d'un manchon (23) tourillonnant sur ladite partie centrale, caractérisée en ce que ledit manchon (23) présente un rebord (24) contre lequel le moyen de manoeuvre (8) est maintenu pressé de préférence via des garnitures frottantes (25, 26) au moyen d'un ressort (27).

5. Bicyclette selon l'une quelconque des revendications 1 à 4, caractérisée en ce que le moyen de manoeuvre (8) actionne via des moyens de transmission tels que câbles (32), pendant pédalage dans le sens de freinage, des moyens (41, 58) de désaccouplement de la roue libre (43, 48, 49), prévue dans la roue menée de la bicyclette, dans son sens d'engrènement.

6. Bicyclette selon la revendication 5, caractérisée en ce que les moyens de désaccouplement (41, 58) rendent la roue libre (43, 48, 49) inactive en faisant quitter à ses moyens d'arrêt (48, 44) la position de blocage en liaison avec l'opération de freinage.

7. Bicyclette selon la revendication 5, dans laquelle le moyeu arrière de la bicyclette est d'une manière connue en soi un axe non tournant (36) sur lequel tourillonne une couronne intermédiaire (38) à laquelle sont fixés un certain nombre de plateaux de pédalier (37) et le moyeu de la roue tourillonne par rapport à cette couronne intermédiaire avec interposition d'un mécanisme de roue libre (43), caractérisée en ce que des ouvertures (40) traversent axialement la couronne intermédiaire en faisant office de guides vis-à-vis de doigts (41) prévus pour être déplacés pendant la fonctionnement du moyen de manoeuvre (8) et pour rendre par ce déplacement ledit mécanisme de roue-libre (43) inactif.

8. Bicyclette selon la revendication 5, dans laquelle le moyeu arrière de la bicyclette comporte un axe creux fixe (54) autour duquel tourillonne une couronne intermédiaire (52) constituant la partie mobile du moyeu et comportant un certain nombre de cliquets (48) destinés à coopérer en vue d'une effet de blocage dans l'un des sens de rotation avec la denture (49) d'une couronne intermédiaire (50) tourillonnant par rapport à l'arbre (54) et comportant un ou plusieurs plateaux de pédalier (51), que dans l'axe creux (54) est monté mobile un plongeur (56) qui fait saillie via un doigt (59) à travers une fente (60) de l'axe (54) est relié à un manchon (58) monté mobile le long de l'arbre (54), caractérisée en ce que le dit, manchon est prévu pour amener les cliquets (48) hors d'engrènement avec la denture (49) lorsqu'il est déplacé dans un sens et que le moyen de manoeuvre (8) provoque le déplacement du plongeur via un moyen de transmission (32).

9. Bicyclette selon la revendication 6, caractérisée en ce que le câble (32) qui manoeuvre la roue libre (43) est relié à une saillie (33) d'un disque (34) qui est relié au moyen d'un pas de vis (35) à l'axe dixe (36) du moyeu arrière de sorte que le disque décrit aussi lorsqu'un mouvement angulaire lui est imprimé un mouvement de déplacement, que sur l'axe (36) tourillonne une couronne intermédiaire (38) présentant un certain nombre de rainures longitudinales (40) qui s'étendent parallèlement à l'axe central de la couronne intermédiaire, que dans lesdites rainures sont disposés avec possiblité de déplacement un certain nombre de moyens de manoeuvre (41) dont chacun prend appui par une de ses extrémités sur une surface latérale du disque (34), qu'il est prévu un ressort (42), qui tend à amener ledit moyen de manoeuvre en contact avec le disque, que la roue libre (43) du moyeu de la roue arrière comporte des moyens de blocage tels que billes (44) qui peuvent prendre et quitter respectivement la position de blocage sous l'effet d'un disque (46) présentant des doigts saillant axialement (45) et présentant aussi un certain nombre d'ouvertures (47) qui sont oblongues (arquées) en direction périphérique, lesdits ouvertures recevant les moyens de manoeuvre dont les extrémités correspondantes sont taillées en biais en vue d'imprimer au dernier disque un mouvement angulaire limité pendant le déplacement axial des moyens de manoeuvre (41) pour amener les cliquets hors de leurs positions de blocage à l'aide desits doigts (45) du disque (46).

Fig. 1

Fig. 2

Fig. 3

Fig. 5

Fig. 4

Fig. 6

Fig. 7

Fig. 8